# EUROPEAN PATENT SPECIFICATION

(11) **EP 1 426 671 B1**
(45) Date of publication and mention of the grant of the patent: **07.05.2008**
(21) Application number: 04000814.6
(22) Date of filing: 24.06.1997
(51) Int. Cl.: F16L 55/179

(54) **Method for using a lateral liner and main liner to repair pipeline**
Verfahren zur Anwendung einer Zweigrohrauskleidung und einer Hauptrohrauskleidung zur Sanierung einer Leitung
Procédé d'utilisation d'un revêtement de branchement et d'un revêtement d'un tuyau principal pour la rénovation de canalisations

(43) Date of publication of application: 09.06.2004
(62) Divisional of application: 97304429.0
(73) Proprietor: LMK Enterprises, Inc., Ottawa, Illinois 61350 (US)
(72) Inventor: Kiest, Larry W. Jr., Ottawa, Illinois 61350 (US); Vanameyde, Gary, Ottawa, Illinois 61350 (US)
(74) Representative: Thomson, Paul Anthony

(56) References cited:
- WO-A-96/31727
- DE-A- 4 031 949
- JP-A- 1 258 938
- US-A- 5 609 439
- US-A- 5 927 341
- PATENT ABSTRACTS OF JAPAN vol. 0140, no. 13 (M-918), 11 January 1990 (1990-01-11) & JP 1 258938 A (KANSAI ELECTRIC POWER CO INC:THE; others: 01), 16 October 1989 (1989-10-16)

## Description

### BACKGROUND OF THE INVENTION

This invention relates to a method for repairing a lateral pipe joining a main pipe.

One method of repairing damaged sewer pipe is to excavate the area surrounding the sewer pipe and replace the broken portion. This is a very expensive and labor intensive solution and is also an inconvenience to residents living in the area and utilizing roadways overlying the area.

Another solution is in situ relining of sewer pipes. In situ methods typically utilize a resin coated liner which is inserted into the existing sewer pipeline and unrolled against the sewer pipe. The unrolled liner is held against the existing sewer pipe while the resin cures to form a new pipe lining within the existing pipe.

One example of such a method is shown in U.S. Patent 4,366,012 dated December 28, 1982. In this patent is shown a process utilizing an elongated outer tube having an inner tube comprised of felt. Uncured resin is introduced into the tube and is used to impregnate the felt inner tube. The two concentric tubes are then inverted into the end of the sewer pipe to be repaired and the inversion process continues until the area of the sewer pipe needing repair has been reached by the inverting tubes. Upon inversion the impregnated felt liner is placed on the outside of the original outer liner, and is pressed against the interior surface of the sewer pipe. When the resin cures a new pipe liner is provided at the area to be repaired.

Patent 4,366,012 shows a method for impregnating the inner felt tube with uncured resin. The impregnation is initiated by pouring the uncured resin in one end of the two concentric tubes. A slit is made in the outer tube approximately 12 inches from the other end of the outer tube. A vacuum cup is placed over the slit and a vacuum is drawn from the outer tube, thereby causing flattening of the outer tube and assisting the resin to spread through the fabric liner and impregnate it from one end to the other. Once the resin has impregnated the entire felt liner the vacuum is shut off and a patch is solvent welded over the slit.

There are several disadvantages to this impregnation process. The slit makes the outer tube or bladder weaker. Furthermore the cutting of a slit and the patching of a slit are time consuming. If the removal of the vacuum source from the vacuum cup is not timed properly, the vacuum cup will suck up some of the resin, thereby rendering the vacuum equipment inoperable.

Another disadvantage of the method of repairing a sewer pipe shown in Patent 4,366,012 is that the outer bladder and the inner felt tube must be inverted into the sewer pipe beginning at a manhole located nearest to the area to be repaired. The inverted tubes must then extend to the area to be repaired, thereby requiring a length of tube which will reach from the nearest manhole to the area to be repaired.

For example, if a 91.44 meter (300 foot) long liner is required, the method of Patent 4,366,012 requires pouring resin at one end of the tube, moving down the tube for approximately 15.24 meters (50 feet), making a slit in the coating of the fabric liner, placing a suction cup over the slit, drawing the resin to that point, removing the vacuum, and placing a patch over the slit. Then it will be necessary to move another 15.24 meters (50 feet) down the tube and repeat the process. This process will continue at approximately 15.24 meter (50 foot) intervals until the desired location on the tube is reached.

The foregoing 15.24 meter (50 foot) intervals are necessary because it is only possible to draw a vacuum so far down the tube and still be effective.

Another disadvantage of the method shown in Patent 4,366,012 is that the fabric liner is coated. In some applications, it would be desirable to utilize a liner that is not coated and instead use a liner that is separate from the bladder.

Most of the sewer mainlines are usually located in roadways and are buried at a considerable depth. These mainlines have lateral pipes that branch off to houses, businesses and industries. Lateral lines are conduits for carrying waste from these houses, businesses and industries out to the mainline sewer.

Mainline sewers are typically straight with access manholes at spaced apart positions along the length of the main sewer line. Mainline sewers are usually owned by municipalities or utility companies who utilize the services of civil or professional engineers for the design of sewer installations, inspections, and final work acceptances.

Lateral sewers on the other hand are typically installed by local plumbers or home owners. It is common to find numerous bends or fittings in a lateral sewer as well as inappropriate materials used in the original construction. These lateral installations offer a greater challenge in repair than do the reconstruction of the straight and professionally designed mainline sewers.

US-5609439 discloses transporting a mat and bladder in the main pipe to beneath a branch pipe and only then displacing the centre of a hat into the branch pipe with pneumatic pressure from below. US-5927341 discloses a similar operation.

### DEFINITION OF THE INVENTION

A method for repairing a lateral sewer pipe which joins a main sewer pipe at a pipe junction involves forming a main/lateral liner assembly having an elongated main liner tube and an elongated lateral liner tube. The main liner tube has first and second main liner tube ends and the lateral line tube has a first lateral liner tube end connected to the main liner tube and has a second lateral liner tube end. The main/lateral liner tube assembly is formed from a felt material having a urethane coat or similar material on its outer surface.

The main liner tube is then impregnated and the lateral liner tube is also impregnated with an uncured material capable of curing and hardening. The main/lateral liner assembly is then moved through the main sewer pipe to an operative position with the main liner tube adjacent the pipe junction and with the lateral liner tube extending within the lateral sewer pipe. Next, a lateral bladder tube is inserted into the lateral liner tube and is spread radially outwardly to press the lateral liner tube against the lateral sewer pipe until the uncured material cures and hardens. Then, a main bladder tube is inserted into the main liner tube and is spread radially outwardly to press the main liner tube against the main liner sewer pipe until the uncured material cures and hardens. The lateral and main bladder tubes are then removed leaving the repaired pipe.

### BRIEF DESCRIPTION OF THE FIGURES OF THE DRAWINGS

Figures 1 to 15 of the accompanying drawings do not form part of the invention but are nevertheless useful for its comprehension.
Figure 1 is a perspective view of a carrier tube having a bladder tube and a repair sleeve mounted therein.
Figure 2 is a perspective view of the bladder tube having the repair sleeve therein.
Figure 3 is a perspective view of the bladder tube of Figure 2 showing the method for inserting the resin into the bladder tube.
Figure 4 is a sectional view taken along line 4-4 of Figure 2.
Figure 5 is a sectional view taken along line 5-5 of Figure 1.
Figure 6 is a sectional view taken along line 6-6 of Figure 1.
Figure 7 is a perspective view of a modified form;
Figure 8 is a view similar to Figure 7, but showing the method of applying the resin to the interior of the bladder tube.
Figure 9 is a sectional view taken along line 9-9 of Figure 7.
Figure 10 is a perspective view showing a sewer line to be repaired and showing the carrier tube inserted therein.
Figure 11 is a sectional view of the sewer pipe showing the manner in which the carrier tube is inserted.
Figure 12 is a view similar to Figure 11, and showing the bladder tube partially inverted,
Figure 13 is a sectional view similar to Figure 12, and showing the bladder tube further inverted.
Figure 14 is a sectional view similar to Figure 13 and showing the withdrawing of the bladder tube from the cured repair sleeve.
Figure 15 is a view similar to Figure 14 and showing the final removal of the bladder tube and the carrier tube with the repair sleeve in place.
Figure 16 is a sectional view of a T-liner assembly which is used in a method for repairing a main lateral sewer pipe junction according to the invention.
Figure 17 is a sectional view of a main lateral sewer pipe junction, showing one step in the method for using the T-liner assembly of Figure 16.
Figure 18 is a sectional view similar to Figure 17 and showing another step in the method for using the T-liner assembly of Figure 16.

### DETAILED DESCRIPTION OF THE PREFERRED EMBODIMENT

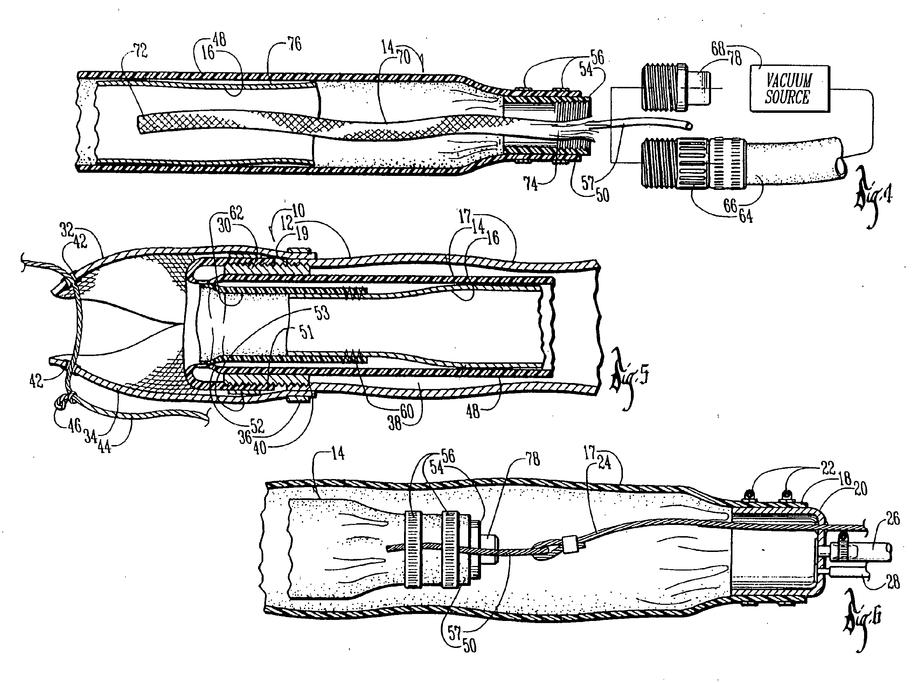

Referring to the drawings the numeral 10 generally designates a repair apparatus of the present invention. Apparatus 10 includes a carrier assembly 12, a bladder assembly 14, and a repair sleeve 16 within the bladder assembly 14. Carrier assembly 12 is comprised of a carrier tube 17 having a rear end 18 and a forward end 19. An end cap 20 is secured to the rear end 18 of carrier tube 17 by means of clamps 22. Extending through the end cap 20 are a bladder control line 24, a fluid injection line 26 and an air escape valve 28 (Fig. 6).

At the forward end of carrier tube 17 is a rigid collar 30 (Fig. 5). A pair of end flaps 32, 34 have their rear ends engaging the collar 30 and clamped to the collar 30 by means of clamp 36. Clamp 36 also holds the forward end 19 of carrier tube 17 against the collar 30. Within the carrier tube is a carrier cavity 38. The attachment of the forward end 19 of the carrier tube 17 to the collar 30 is further facilitated by threads or serrations 40 on the outer surface of collar 30.

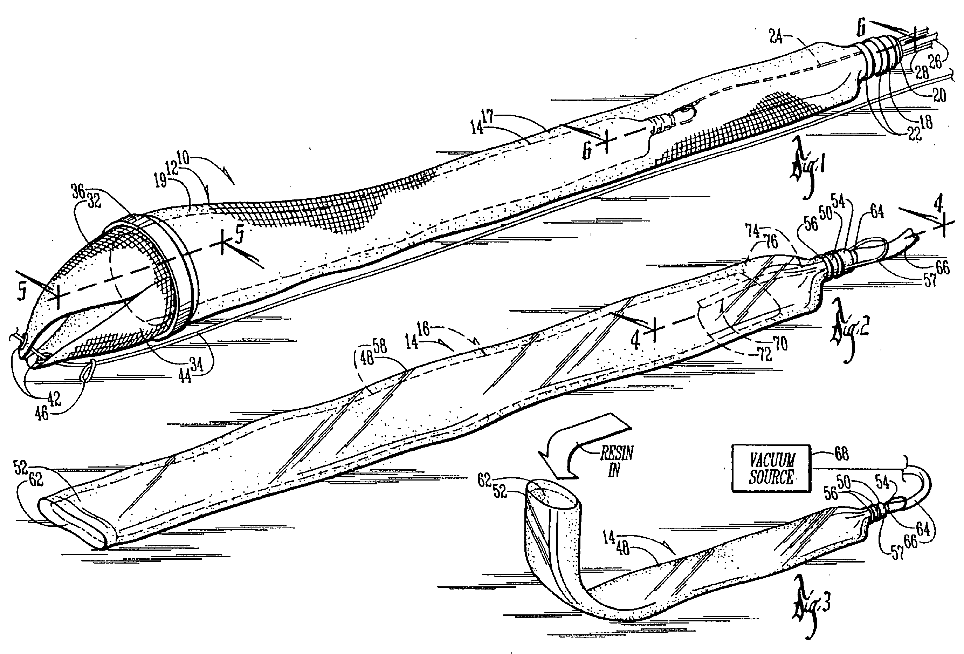

The forward ends of end flaps 32, 34 include grommets 42. A pull line 44 is threaded through grommets 42 (Fig. 1) and includes a knot 46 which permits the line 44 to pull the carrier 12 to the left as viewed in Figure 1. However, when the pull line 44 is pulled to the right, it slips free from the grommets 42.

Bladder assembly 14 is shown in Figure 2 and includes bladder tube 48 having a rear end 50 and a forward end 52. Fitted within the rear end 50 is a threaded receptacle 54 (Fig. 6) which is held in place in attachment to the rear end 50 by means of clamps 56. A pulling loop 57 is also held by clamps 56 and is attached to bladder control line 24 as shown in Figure 6.

Referring to Figure 5, within the bladder tube 48 is repair sleeve 16 formed of felt or other resin absorbent material. The sleeve 16 is attached at its forward end to an inversion collar 62 by means of stitches 60. The forward end of inversion collar 62 is fixedly attached to the forward end 52 of bladder tube 48 by heat sealing, adhesive, or other suitable securing means. The stitches 60 are easily broken away so as to permit the forward end of the repair sleeve 58 to be separated from the rear end of inversion collar 62 by tension forces. A cuff 51 is folded back at forward end 52 of bladder tube 58 and is secured to collar 30 by means of a hose clamp 53.

Referring to Figure 4, a vacuum coupler 64 includes a threaded end adapted to thread within the threaded receptacle 54 so as to connect a vacuum hose 66 and a vacuum source 68 to the bladder tube 48. A wick 70 includes a forward end 72 located forwardly of the rear end 76 of repair sleeve 58. The wick 70 extends rearwardly therefrom to a rear end 74 located adjacent the threads of threaded receptacle 54.

The method of impregnating the repair sleeve 58 with resin involves pouring the resin into the forward end 52 of bladder tube 48 as illustrated in Figure 3. A quantity of resin sufficient to impregnate the entire repair sleeve 58 is poured into the bladder tube. A vacuum is applied to the vacuum tube 26 so as to cause the bladder tube 48 to collapse in a flattened state.

The wick 70 provides an important function in this regard since it permits the gas within the bladder tube 48 to be withdrawn even though the bladder tube 48 is collapsed. The felt or other resin absorbent material of repair sleeve 58 permits gas to be withdrawn, but this sleeve does not permit gas to be withdrawn in the area between the rear end 76 of sleeve 58 and the rear end 50 of the bladder tube 48. The wick 70 however, permits the gases to be withdrawn through this particular area. As a result the flattening of the bladder tube 48 causes the resin to be pressed rearwardly from the forward end until it has completely impregnated the felt or other resin absorbent material of repair sleeve 58. Rollers (not shown) may also be applied to the flattened bladder tube 48 to facilitate the spread of resin to all portions of repair sleeve 58. The bladder tube 48 is preferably formed of a transparent or translucent material which permits visual observation of the progress of the resin as it is spread through the repair sleeve 58. By visual inspection it is possible to determine when the resin has spread completely to the rear end 76 of the repair sleeve 58. The vacuum coupler 64 is then withdrawn from the threaded receptacle 54 and a closure cap 38 is threaded in its place. During the removal of the vacuum coupler 64, the wick 70 is grasped and pulled out of the bladder tube 48. The wick 70 will have resin impregnated on its inner end, and can be placed inside the manhole where the repair is taking place as a gauge for determining how long it takes for the resin to cure.

After impregnating the repair sleeve 58, the bladder assembly 14 having the repair sleeve 16 therein is placed inside the carrier tube 17 as shown in Figure 1.

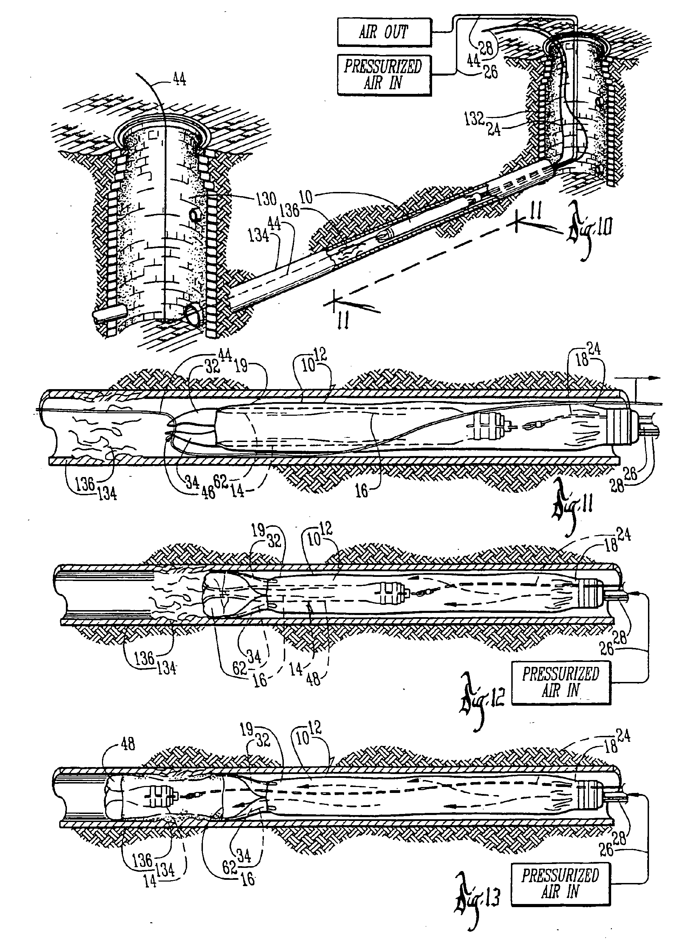

As shown in Figure 10, the repair apparatus 10 is then pulled through a sewer line 134 having a area 136 requiring repair. A television camera (not shown) may be placed within the sewer line 134 to show the proper location for the carrier 10 relative to the area 136 needing to be repaired.

When the carrier tube 17 reaches the position shown in Figure 11, air pressure, water pressure or other fluid pressure is applied to the carrier cavity 38. This causes the bladder tube 48 to begin to invert out of the carrier tube 17 in the manner illustrated in Figure 12. The inversion of the bladder tube 48 continues until it reaches the position shown in Figure 13. In this position the repair sleeve 58 is on the outside of the bladder tube 48 and is in engagement with the area 136 of pipe 134 which requires repair. The fluid pressure is continued to be applied to the inverted bladder tube 48, thereby pressing the bladder tube 48 radially outwardly so as to hold the repair sleeve 58 tightly against the area 136.

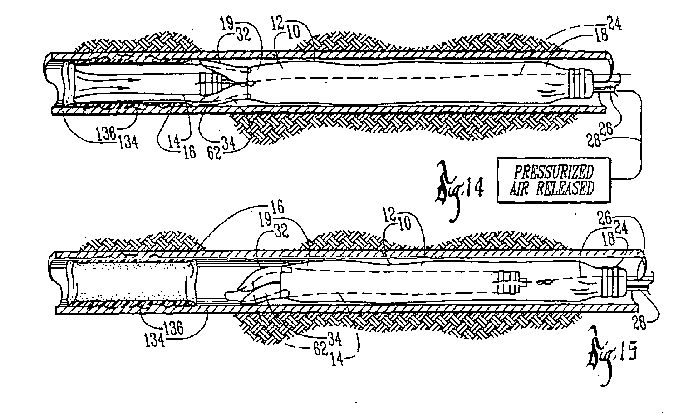

The resin is permitted to cure and harden. Then the air pressure is released from the carrier tube 17 as shown in Figure 14 and the bladder control line 24 is pulled to cause the bladder 48 to move to the right and resume its original uninverted configuration within the carrier tube 17. During the withdrawal of the bladder tube 48, the stitches 60 break away as to permit separation of inversion collar 62 from repair sleeve 58, thereby leaving the hardened repair sleeve 58 in place as shown in Figure 15.

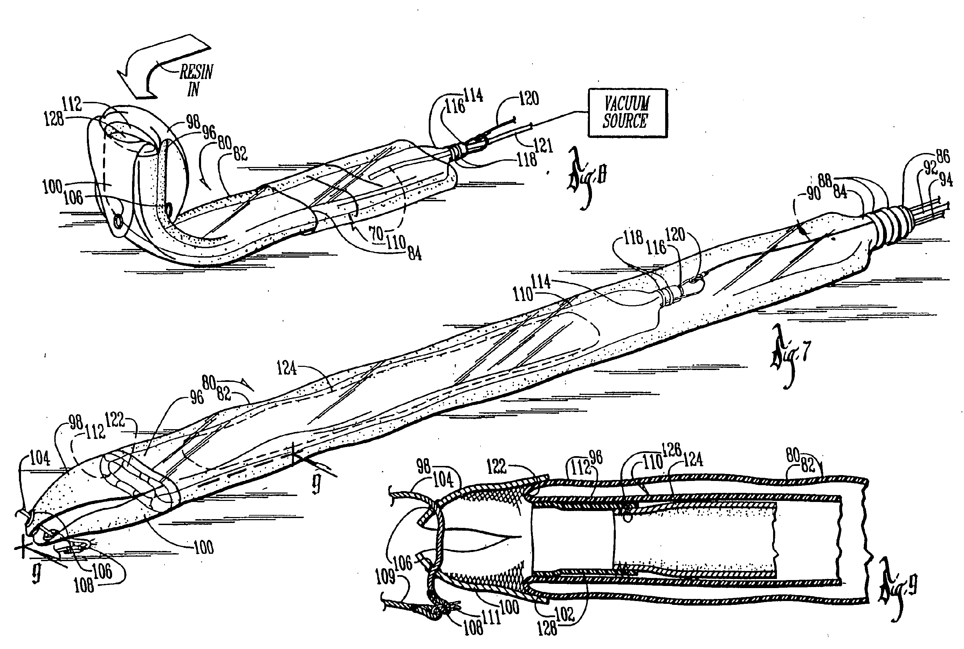

Referring to Figure 7 a modified form of the present invention is shown and is designated by the numeral 80. Apparatus 80 includes an outer carrier tube 82 having a rear end 84 which surrounds an end cap 86 and is clamped thereto by means of clamps 88. Extending through end cap 86 are a bladder control line 90, a fluid injection line 92, and an air escape valve 94. The outer carrier tube 82 includes a forward end 96 to which is attached by heat sealing or welding a pair of end flaps 98, 100. Flaps 98, 100 are held in place by a spot weld 102 (Fig. 9). A pull cable 104 extends through the grommets 106 in the end flaps 98, 100 and includes a loop 108 on its end.

A release cable 109 has a spring pin 111 on its end. Spring pin 111 is detachably retentively retained in loop 108 so as to attach cable 104 to flaps 98,100. Pulling cable 104 is used to pull the apparatus 80 through the sewer line to the desired location. Then release cable 109 is pulled and spring pin 111 releases from loop 108, thereby permitting cable 104 to slip through grommets 106 and release its attachment from flaps 98,100.

Integrally formed with the outer carrier tube 82 is an inner bladder tube 110 which has a forward end 112 and a rear end 114 adapted to receive a threaded receptacle 116, clamps 118, and a pulling loop 120. A vacuum line 121 is adapted to connected to the receptacle 116 in the same fashion shown and described for the modification in Figure 2.

The juncture between the outer carrier tube 82 and the inner bladder tube 110 comprises a fold 122 where the carrier tube 82 has been folded back over the bladder tube 110. Initially the bladder tube 110 and the carrier tube 82 are one continuous tube, and the carrier tube 82 is formed by folding it back over the bladder tube 110.

An inversion collar 128 is spot welded or otherwise attached to the forward end 112 of bladder tube 110 and extends rearwardly therefrom. At its rear end it is attached to a repair sleeve 124 by means of threads 126. The repair sleeve is formed of felt or other material which is capable of absorbing an uncured resin. Fiber glass, seamless polyester knit tube, or other materials could be used other than felt or in combination with felt.

Several advantages are obtained by the use of the modified apparatus 80 shown in Figures 7-9 over the apparatus 10 shown in Figures 1-6. For example, the apparatus 10 utilizes a rigid collar or clamp 36 at the forward end of the carrier tube 12 in order to connect the bladder assembly 14. This rigid collar can in some situations get caught on offset sewer pipe joints during installation or in places where the pipe is partially collapsed, and in those situations the carrier sometimes becomes caught or is unable to pass through the pipe. The rigid collar 36 also adds considerable weight to the repair apparatus whereas the apparatus 80 shown in Figures 7-9 is light in weight, weighing about one fourth of what the apparatus 10 weighs.

Another advantage of the apparatus 80 is that it eliminates the step of pulling the bladder assembly 14 into the carrier 12.

The rigid collar 36 used in device 10 must be smaller in diameter than the host sewer pipe. This smaller opening makes it harder for the liner to pass through and requires more pressure than the apparatus 80 which is collapsible and which has a front opening of a size which can be the same as the host pipe. This makes it easier for the apparatus 80 to pass through during inversion and requires less pressure.

The apparatus 10 requires different length and diameter carriers for the various liners installed. This means that the installer must keep an inventory of carriers that are expensive. The installer must also transport more equipment to the job site. The carrier 82 of apparatus 80 is disposable and is designed especially for the liner length and diameter matched to the pipe that is being repaired.

Figure 8 shows the manner in which the device is filled with resin. The resin is poured into the forward end of bladder tube 110 while bladder tube 110 is located within the outer carrier tube 82. Carrier tube 82 and bladder tube 110 are integral with one another and are preferably formed of a transparent or translucent material which will permit observation of the resin as it is poured into the bladder tube 110. The rear end 84 of the carrier tube 82 is folded forwardly as shown in Figure 8 so as to expose the rear end of the bladder tube 110 and permit the attachment and detachment of vacuum tube 121. As the vacuum is applied, a roller (not shown) may be used to roll the bladder tube 110 and the carrier tube 82 flat and press the resin rearwardly toward the rearward end of the bladder tube 110. When the fabric liner or repair sleeve 124 of bladder tube 110 is fully impregnated, the vacuum tube 121 is removed and a plug similar to the plug 78 is inserted after removal of the wick 70. The carrier tube 82 is then unfolded at its rear end and it is attached to the end cap 86 in the manner shown in Figure 7.

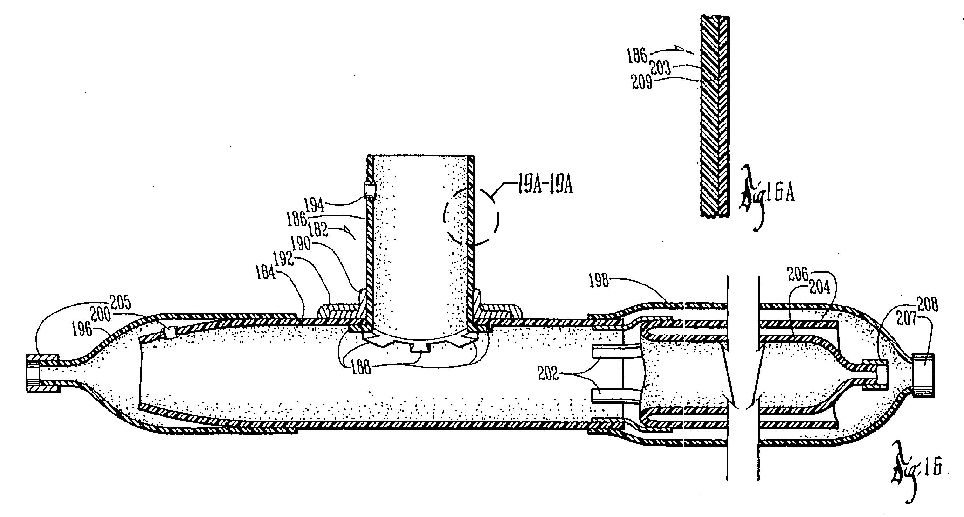

Another method for repairing both the main line and the lateral in one operation utilizes a T-liner assembly 182 shown in Figures 16-18. T-liner assembly 182 includes a main liner sleeve 184 and a lateral liner sleeve 186. These sleeves are formed from a material capable of absorbing uncured resin or grout. An example of such a material is felt, but other materials may be used. The exterior surface of the main liner sleeve 184 and the lateral liner sleeve 186 are coated with urethane or a similar material which will permit them to be protected while being pulled through sewer pipes to their desired position. The urethane coating also provides a moisture impervious barrier. The T-liner assembly 182 is formed by cutting the urethane coated felt to a layflat size required to make a tube approximately 30 inches in length and having a diameter slightly smaller than the interior diameter of the main line host pipe to be repaired. A circular hole is cut in the center of the layflat felt for accommodating the lateral liner sleeve 186.

Then the lateral liner sleeve is formed from 10.16 or 15.24 cm (a four or a six inch tube) made of urethane coated felt. The length is dependent upon the distance from the main line to the excavation 137. On the end of the lateral liner tube 186 which is going to be connected to the mainliner tube 184, approximately 2.54 centimeters (one inch) of urethane coating is removed from the exterior. The remaining 2.54 centimeters (one inch) long section is cut into slits so as to form tabs 188 which are inserted into the hole in the main liner tube 184 and are bent back to layflat against the felt. The felt of lateral tube 186 is then heat welded or otherwise adhered to the felt of the main liner tube 184 so as to secure the lateral liner tube 186 to the main liner tube 184 in the manner shown in Figure 19.

Next a urethane collar 190 is slid down over the lateral liner and is fused to the coating on the lateral liner and the main liner by heat or chemical adhesive. This collar provides for an airtight seal between the two liners 184, 186. A gasket 192 made of absorbent material such as an open cell foam or similar material shaped like a donut is then slid down over the lateral liner until it reaches the junction between the lateral liner tube 186 and the main liner tube 184. This gasket will be impregnated with a hydrophilic chemical grout just prior to installation. The grout gasket will provide for a seal between the liners and the main host pipe, thereby eliminating any ground water from infiltrating into the main line sewer pipe 210. Lateral liner tube 186 is provided with a grommet 194 and main liner tube 184 is provided with a grommet 200.

Attached to one end of the main liner tube 184 is a urethane envelope 196 having an end cap 205 capable of attachment to a vacuum line (not shown) similarly the other end of the main liner tube 184 is provided with a urethane e envelope 198 which also includes an end cap 207 capable of attachment to a vacuum tube. (not shown).

An inversion bladder similar to the inversion bladder shown in Figures 7-9 is attached to one end of main line tube 184 by tab strips 202 and is completely enclosed within the urethane envelope 198. The bladder assembly includes a carrier tube 106 and a bladder tube 204 which are integrally formed and which are folded back against one another. An end cap 208 is secured over the interior end of bladder liner 204. Unlike the carrier tube assembly shown in Figures 7-9 however, the bladder tube 204 does not include a repair collar mounted on its interior.

Before installation into a sewer pipe to be repaired, a hydrophilic chemical grout is impregnated into the grout ring 192, and an uncured resin is inserted into the upper end of lateral liner sleeve 186. A vacuum is applied first to end tube 205 of urethane envelope 196. This draws the resin inwardly through lateral liner sleeve 186 and through the right-hand portion of the main liner sleeve 184 as viewed in Figure 19. Next a vacuum is applied to the envelope 198, and resin is drawn into the left-hand portion of main line liner sleeve 184. The end result is that the interior felt surfaces of lateral liner 186 and main line liner 184 are impregnated with the resinous material. When this impregnation is complete the urethane envelopes 196, 198 are snipped off with scissors leaving the remaining assembly of the T-liner assembly 182 and the carrier tube 206 and bladder tube 204.

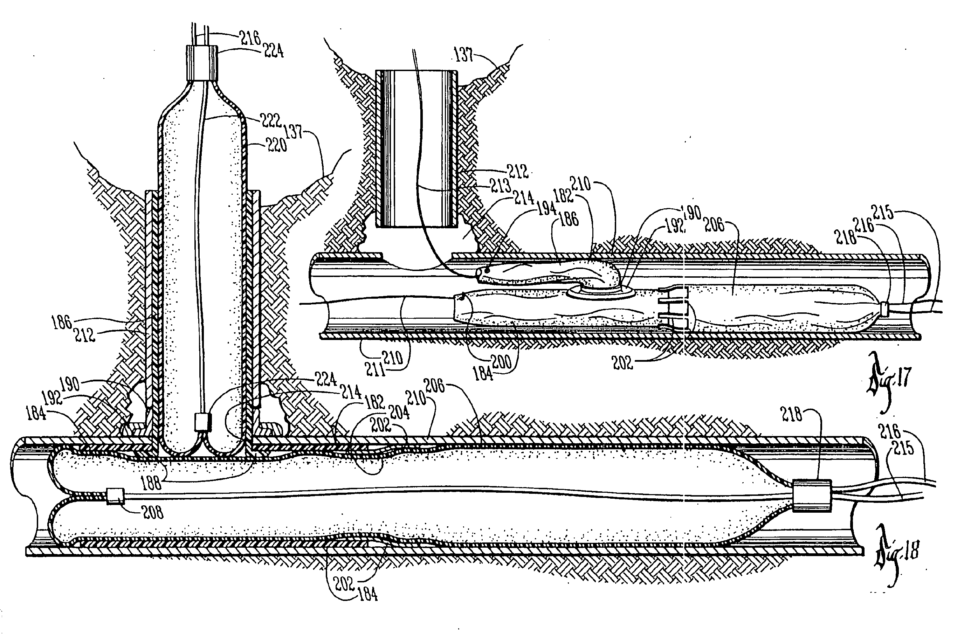

Referring to Figure 17, a lateral pull line 213 is attached to the grommet 194 in liner sleeve 186, and a main pull line 211 is attached to the grommet 200 in the lateral liner sleeve 186. Line 213 is threaded through the sewer line 210 and into the excavation 137. Line 211 is threaded through a main sewer line 210 and through a lateral sewer line 212 into an excavation 137. Line 211 is threaded through the main sewer pipe 210 to an adjacent manhole (not shown

Connected to the end of carrier tube 206 is an end cap 218 having an air line 216 extending therethrough. Also extending through end cap 218 is a retrieval line 215 which is attached to the end cap 208 of bladder tube 204 as shown in Figure 18.

The lines 211 and 213 are simultaneously pulled to bring the liner tube assembly 182 to the juncture 214 between the main line sewer pipe 210 and the lateral line sewer pipe 212. Continued pulling on the lines 211 and 213 causes the lateral liner sleeve 186 to be pulled upwardly into the lateral sewer pipe 212 in the position shown in Figure 18.

Next, air pressure is provided to the bladder tube 204 to cause it to invert into the main liner sleeve 184 as shown in Figure 18. The air pressure holds the main liner tube 184 against the interior of the surface of the main sewer line 210 so that the resin impregnated within the liner sleeve 184 can cure and harden into a cylindrical shape.

Next, another bladder tube assembly is inverted into the lateral liner sleeve 186 from the excavation 137. The bladder tube assembly includes a bladder tube 220 and a retrieval line 222 which extends through an end cap 224. Continued air pressure provided to the bladder tube 220 forces it radially outwardly against the lateral liner sleeve 186 until the resin impregnating the lateral liner tube 186 cures and hardens. It also forces the grout 192 into the cracks and crevices at the juncture between lateral pipe 212 and main line pipe 210 thereby providing a water tight seal to prevent infiltration of ground water into the lateral pipe 212 and the sewer line 210.

After the curing of the grout and the resin within the liner assembly 182, the retrieval lines 215, 216 are pulled to remove the bladder assemblies 204 and 220 from the liner sleeves 184, 186 respectively. The result is a repaired juncture 214 between the lateral line 212 and the main line 210

In the drawings and specification there has been set forth a preferred embodiment of the invention, and although specific terms are employed, these are used in a generic and descriptive sense only and not for purposes of limitation.

## Claims

1. A method for repairing a lateral sewer pipe (212) which joins a main sewer pipe (212) at a pipe junction, said method comprising: forming a main/lateral liner assembly (182) having an elongated main liner tube (184) and an elongated lateral liner tube (186), said main liner tube (184) having first and second main liner tube ends, said lateral liner tube (186) having a first lateral liner tube end connected to said main liner tube and having a second lateral liner tube end; impregnating said main liner tube (184) and said lateral liner tube (186) with an uncured material capable of curing and hardening; pulling said main/lateral liner assembly (182) through said main sewer pipe (212) to an operative position with said main liner tube (184) within the main sewer pipe (212) adjacent said pipe junction and with said lateral liner tube (186) extending within said lateral sewer pipe; inserting a lateral bladder tube (220) into said lateral liner tube (186); spreading said lateral bladder tube (220) radially outwardly to press said lateral liner tube (186) against said lateral sewer pipe until said uncured material cures and hardens; inserting a main bladder tube (204) into said main liner tube (184); spreading said main bladder tube (204) radially outwardly to press said main liner tube (184) against said main sewer pipe (212) until said uncured material cures and hardens.

2. A method according to claim 1 wherein said inserting of said lateral bladder tube (220) into said lateral liner tube (186) is accomplished by inverting said lateral bladder tube (220) into said lateral liner tube (186) and wherein the lateral bladder tube (220) and the main bladder tube (204) directly contact the lateral liner tube (186) and the main liner tube (184) respectively during the spreading steps.

3. A method according to claim 2 wherein said inserting of said main bladder tube (204) into said main liner tube (184) is accomplished by inverting said main bladder tube (204) into said main liner tube (184).

4. A method as claimed in any preceding claim wherein the main/lateral liner tube assembly (182) is formed from a felt material (203) having a urethane coat (209) on its outer surface.

5. A method according to claim 1 wherein the step of pulling the main/lateral liner assembly (182) comprises using a first line (211) attached to the main liner tube (182) to pull the main liner tube (182) into the main sewer pipe (210) and further comprises using a second line (213) attached to the lateral liner tube (186) to pull the lateral liner tube (186) into the lateral sewer pipe (212).

## Patentansprüche

1. Verfahren zur Sanierung eines Zweigabwasserrohrs (212), das an einer Rohrverbindung mit einem Hauptabwasserrohr (210) verbunden ist, wobei das Verfahren umfasst: Bilden einer Haupt/Zweigrohr-Auskleidungsanordnung (182) mit einer langgestreckten Hauptrohrauskleidung (184) und einer langgestreckten Zweigrohrauskleidung (186), wobei die Hauptrohrauskleidung (184) erste und zweite Hauptrohrauskleidungsenden aufweist und wobei die Zweigrohrauskleidung (186) ein erstes Zweigrohrauskleidungsende, das mit der Hauptrohrauskleidung verbunden ist und ein zweites Zweigrohrauskleidungsende aufweist; Imprägnieren der Hauptrohrauskleidung (184) und der Zweigrohrauskleidung mit einem nicht abgebundenen Material, das in der Lage ist, abzubinden und auszuhärten; Ziehen der Haupt/Zweigrohr-Auskleidungsanordnung (182) durch das Hauptabwasserrohr (210) in eine funktionsfähige Stellung relativ zu der Hauptrohrauskleidung (184) innerhalb des Hauptabwasserrohrs (210) in der Nähe der Rohrverbindung und relativ zu der Zweigrohrauskleidung (186), die sich in dem Zweigabwasserrohr befindet; Einsetzen einer Zweigrohrblase (220) in die Zweigrohrauskleidung (186); Ausdehnen der Zweigrohrblase (220) radial nach außen, um die Zweigrohrauskleidung (186) gegen das Zweigabwasserrohr zu drücken, bis das nicht abgebundene Material abbindet und aushärtet; Einsetzen einer Hauptrohrblase (204) in die Hauptrohrauskleidung (184); Ausdehnen der Hauptrohrblase (204) radial nach außen, um die Hauptrohrauskleidung (184) gegen das Hauptabwasserrohr (210) zu drücken, bis das nicht abgebundene Material abbindet und aushärtet.

2. Verfahren nach Anspruch 1, bei dem das Einsetzen der Zweigrohrblase (220) in die Zweigrohrauskleidung (186) durch das Umkrempeln der Zweigrohrblase (220) in die Zweigrohrauskleidung (186) hinein erfolgt, und bei dem die Zweigrohrblase (220) und die Hauptrohrblase (204) während der Schritte des Ausdehnens direkt in Kontakt mit der Zweigrohrauskleidung (186) bzw. der Hauptrohrauskleidung (184) kommen.

3. Verfahren nach Anspruch 2, bei dem das Einsetzen der Hauptrohrblase (204) in die Hauptrohrauskleidung (184) durch das Umkrempeln der Hauptrohrblase (204) in die Hauptrohrauskleidung (184) hinein erfolgt.

4. Verfahren nach einem der vorstehenden Ansprüche, bei dem die Haupt/Zweigrohr-Auskleidungsanordnung (182) aus einem Filzmaterial (203) hergestellt wird, das auf seiner Außenfläche eine Urethanbeschichtung (209) aufweist.

5. Verfahren nach Anspruch 1, bei dem der Schritt des Ziehens der Haupt/Zweigrohr-Auskleidungsanordnung (182) das Verwenden einer ersten, mit der Hauptrohrauskleidung (182) verbundenen Leine (211) umfasst, um die Hauptrohrauskleidung (184) in das Hauptabwasserrohr (210) zu ziehen und weiter das Verwenden einer zweiten, mit der Zweigrohrauskleidung (184) verbundenen Leine (213) umfasst, um die Zweigrohrauskleidung (186) in das Zweigabwasserrohr (212) zu ziehen.

## Revendications

1. Procédé de réparation d'une canalisation latérale (212) d'égout qui rejoint une canalisation principale (210) d'égout au niveau d'une jonction de canalisations, ledit procédé comprenant les étapes consistant à : former un ensemble gaine principale/gaine latérale (182) avec un tube de gaine principale allongé (184) et un tube de gaine latérale allongé (186), ledit tube (184) de gaine principale ayant une première et une deuxième extrémité de tube de gaine principale, ledit tube (186) de gaine latérale ayant une première extrémité de tube de gaine latérale reliée audit tube de gaine principale, et ayant une deuxième extrémité de tube de gaine latérale ; imprégner ledit tube (184) de gaine principale et ledit tube (186) de gaine latérale avec un matériau non polymérisé apte à se polymériser et à durcir ; tirer ledit ensemble gaine principale/gaine latérale (182) à travers ladite canalisation principale (210) d'égout jusqu'à une position opérationnelle avec ledit tube (184) de gaine principale à l'intérieur de la canalisation principale (210) d'égout, de manière adjacente à ladite jonction de canalisations et avec ledit tube (186) de gaine latérale s'étendant dans ladite canalisation de gaine latérale ; insérer un tube latéral (220) de vessie gonflable dans ledit tube (186) de gaine latérale ; dilater ledit tube latéral (220) de vessie gonflable radialement vers l'extérieur pour repousser ledit tube (186) de gaine latérale contre ladite canalisation latérale d'égout jusqu'à ce que ledit matériau non polymérisé se polymérise et durcisse ; insérer un tube principal (204) de vessie gonflable dans ledit tube (184) de gaine principale ; dilater ledit tube principal (204) de vessie gonflable radialement vers l'extérieur pour repousser ledit tube (184) de gaine principale contre ladite canalisation principale (210) d'égout jusqu'à ce que ledit matériau non polymérisé se polymérise et durcisse.

2. Procédé selon la revendication 1, dans lequel ladite insertion dudit tube latéral (220) de vessie gonflable dans ledit tube (186) de gaine latérale est réalisée en retournant ledit tube latéral (220) de vessie gonflable dans ledit tube (186) de gaine latérale, et dans lequel le tube latéral (220) de vessie gonflable et le tube principal (204) de vessie gonflable sont directement en contact respectivement avec le tube (186) de gaine latérale et le tube (184) de gaine principale pendant les étapes de dilatation.

3. Procédé selon la revendication 2, dans lequel ladite insertion dudit tube principal (204) de vessie gonflable dans ledit tube (184) de gaine principale est réalisée en retournant ledit tube principal (204) de vessie gonflable dans ledit tube (184) de gaine principale.

4. Procédé selon l'une quelconque des revendications précédentes, dans lequel l'ensemble gaine principale/gaine latérale (182) est fait d'un matériau en feutre (203) avec un revêtement d'uréthane (209) sur sa surface extérieure.

5. Procédé selon la revendication 1, dans lequel l'étape de traction de l'ensemble gaine principale/gaine latérale (182) comprend une première corde (211) fixée au tube (184) de gaine latérale pour tirer le tube (184) de gaine principale dans la canalisation principale (210) d'égout et comprend de plus l'utilisation d'une deuxième corde (213) fixée au tube (186) de gaine latérale pour tirer le tube (186) de gaine latérale dans la canalisation latérale (212) d'égout.
